Europäisches Patentamt

European Patent Office

Office européen des brevets

(11) Publication number: **0 024 877**
**B1**

## EUROPEAN PATENT SPECIFICATION

(45) Date of publication of patent specification: 28.03.84

(51) Int. Cl.³: **F 16 K 31/06**

(21) Application number: **80302872.9**

(22) Date of filing: **19.08.80**

(54) Electrically modulated valve.

(30) Priority: **23.08.79 GB 7929432**

(43) Date of publication of application:
**11.03.81 Bulletin 81/10**

(45) Publication of the grant of the patent:
**28.03.84 Bulletin 84/13**

(84) Designated Contracting States:
**DE FR GB IT**

(56) References cited:
**DE - A - 1 464 907**
**DE - C - 847 465**
**DE - U - 7 142 492**
**US - A - 3 788 597**
**US - A - 3 902 527**

(73) Proprietor: **SPERRY LIMITED**
**Sperry House 78 Portsmouth Road**
**Cobham, Surrey, KT11 1JZ (GB)**

(72) Inventor: **Roderick, Raymond Thomas**
**80 Roundway**
**Waterlooville Hampshire (GB)**

(74) Representative: **Singleton, Jeffrey**
**Eric Potter & Clarkson 5 Market Way Broad Street**
**Reading Berkshire, RG1 2BN (GB)**

Courier Press, Leamington Spa, England.

Electrically modulated valve

The invention relates to electrically modulated fluid control valves and to solenoids for such valves.

An electrically modulated fluid control valve is known from US—A—3,788,579 in which actuation of the valve is accomplished by means of a so-called linear solenoid, with the axial movement of the solenoid armature, relative to a pole piece located inside the surrounding coil structure, being transmitted to a valve member which, in co-operation with an orifice, provides a variable restriction of the flow path through the valve. In particular, a linear solenoid is known from the prior art in which a push-pin extends from the armature through a central bore in the pole piece and terminates, on the other side of the pole piece, at the valve member. The push-pin and the armature to which the push-pin is secured are supported by two axially spaced ball bearings. The adjacent endfaces of the pole piece and the armature are planar, so that the magnetic flux traverses the gap between the pole piece and the armature in an almost exclusively axial direction. Such a solenoid has an inverse force-stroke relationship, with the force on the armature increasing as the gap decreases, and vice-versa. This inverse force-stroke relationship is generally undesirable because of the resulting instability of the valve.

From DE—U—7 142 492 is known a solenoid in which the adjacent endfaces of the armature and the pole piece are provided with an axially extending stepped projection and a corresponding recess respectively, for the purpose of reducing and, over a small portion of the stroke even reversing, the slope of the stroke-force characteristic.

The present invention aims to provide an electrically modulated fluid control valve having improved operating characteristics and, in particular, improved stability in operation.

The present invention is based on the appreciation that the use of a solenoid having at least a limited region in which the force-stroke characteristic is positively sloped, and operating the actuating means within that region, gives improved operational stability of a valve actuated by such a solenoid.

The positively sloping region of the force-slope characteristic is provided by at least one co-operating projection and recess on the facing endfaces of the armature and the pole piece. An annular gap separating the adjacent sides of the projections and recesses may be chosen to be sufficiently narrow to divert, over the desired region, a large enough amount of the magnetic flux between pole piece and armature from the axial to the radial direction to obtain the positive slope. The solenoid is confined to operate within the positively sloped region by suitable displacement limiting means. These displacement limiting means may, where convenient, be incorporated in the attached valve.

The slope of the positively sloped region is preferably greater than 10,000 Newton/meter.

The accuracy of armature alignment necessary for satisfactory operation in the positive sloping region, particularly in view of the lateral forces experienced by the armature as a result of the radial flux component, is conveniently effected by employing bearings of the kind having a plurality of bearing elements disposed radially about the axis of movement of the armature and individually rotatable about tangential axes. A further effect of using bearings of this kind is to widen the choice of suitable materials to include even magnetic materials and, by permitting the selection of hard materials such as for example steel bearing balls, give better lateral guidance of the armature means combined with improved hysteresis characteristics on account of the reduction in the frictional forces.

The invention shall now be described further by way of example and with reference to the accompanying drawings of which:-

Figure 1 is a sectional view of an electrically operated pressure relief valve in accordance with the present invention;

Figure 2 shows an enlarged cross-sectional view of the core-tube assembly of Figure 1; and

Figures 3 to 5 show various graphs which aid the understanding of the present invention.

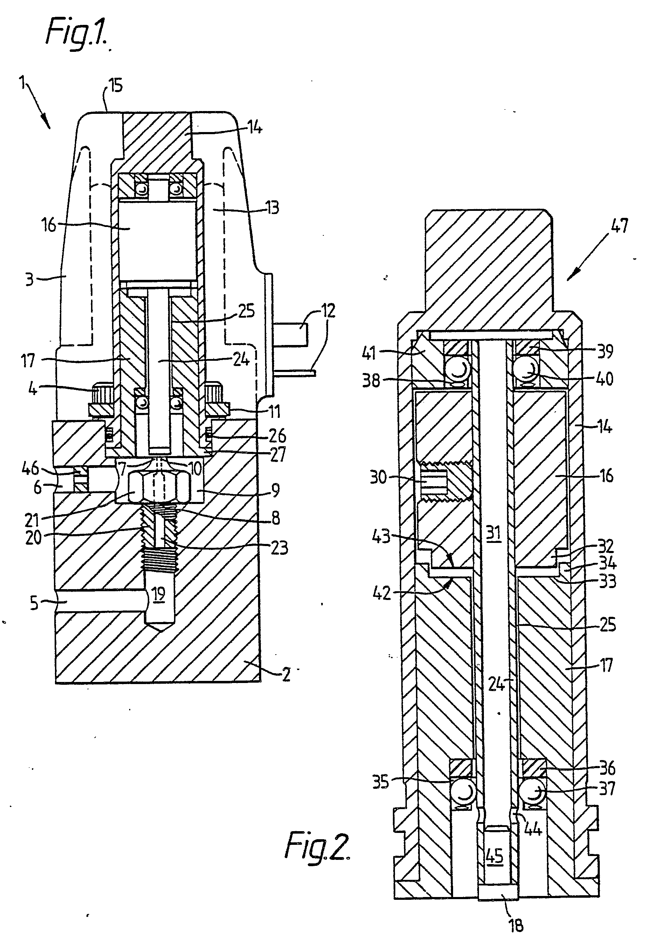

Referring at first to Figure 1, a hydraulic pressure relief valve 1 embodying the present invention comprises a valve body 2 and a solenoid assembly 3. The valve body 2 contains the inlet and outlet fluid passages 5 and 6 which are usually provided with coupling assemblies (not shown) for facilitating connection to the adjoining pipe system. The inlet 5 and the outlet 6 are connected by an internal passage 19 which, at its end nearest the orifice chamber 9, incorporates the orifice insert 8. The orifice insert 8 has a standard size hexagonal head 21, for ease of mounting of the orifice insert, and a threaded shaft 20 which is secured within a threaded portion of the internal passage 19. An axial hole 23 of the orifice insert 8 terminates at its outer end in the small aperture orifice 10.

The solenoid assembly 3 is contained within a solenoid cover 15 which houses the core tube 14 and the DC coil assembly 13 surrounding the cylindrical core tube 14. The core tube is either made altogether of non-magnetic material or includes at least a non-magnetic wall section in the vicinity of the pole piece 17. Current proportional to the desired pressure setting is supplied to the solenoid coil 13 via electrical terminals 12. The core tube 14 lies centrally within the coil assembly and contains the armature assembly, comprising the cylindrical armature 16 and the push-pin 24, and the pole piece 17 which has an axial through bore 25 through which the push-pin 24 extends to terminate in the anvil 18 opposite the orifice 10. The core tube assembly is secured to the valve body 2 by means of a rectangular mounting plate 11 held in place by four mounting screws 4 at the four corners of the mounting plate 11. An O-ring 26, together with a back-up ring, provide a fluid seal preventing hydraulic fluid from escaping past the core tube 14. The pole piece 17 is a push fit within the core tube 14 and is held in place by a flanged end section 27 clamped between the core tube and the valve body 2.

Referring now also to Figure 2, which shows the core tube assembly 47 of Figure 1 in greater detail, the pole piece 17 has a recessed endface 42, with a peripheral rim 34 extending in an axial direction towards the adjacent endface 43 of the armature 16, whose reduced diameter end portion 32 is of a diameter such as to leave only a small annular gap between its outside surface and the inside surface of the rim 34. The armature 16 is secured to the hollow push-pin 24, which extends nearly the whole length of the core tube 14, by means of a set screw 30 and an adhesive compound. The outside diameter of the armature 16 is chosen so as to leave a small clearance with the inside of the core tube 14. The armature assembly is supported within the core tube by axially spaced ball bearings 35 and 38, each comprising four steel bearing balls 37, 40 disposed radially about the push-pin 24 at right angles to each other and held in place respectively by means of plastics cages 36 and 39. The cage 36 is housed in the pole piece 17, while the cage 39 is supported with the core tube 14 by a metal bearing housing 41 which at the same time provides an endstop for the armature 16. The cages 36 and 39 have axially directed grooves along which the bearing balls 37, 40 can move to accommodate the small amount of axial displacement during axial movement of the armature assembly, which in the present valve is of the order of 0.2 mm, while preserving the fixed angular distribution of the bearing balls.

A small amount of radial clearance between the push-pin 24 and the bearing balls 37 and 40 is necessary, firstly to allow insertion of the open end of the push-pin 24 into the bearing 38 and fitting of the pole piece 17 with bearing 35 over the other end of the push pin 17 when assembling the core tube assembly 47, and secondly to avoid undue friction at the bearings 37 and 40 in operation of the valve 1. As a result of this radial clearance, de-centering of the armature assembly under the action of the radial magnetic flux will still occur, but will be strictly limited on account of the rigidity of the bearing balls. Furthermore, because of very narrow tolerance limits to which steel bearing balls are manufactured commercially, it is possible to reduce the radial clearance to the necessary minimum already at the design stage without incurring a severe cost penalty.

Deflection of the armature by the radial flux generated forces will generally be in a direction bisecting the angle between two neighbouring bearing balls, and during axial movement the push-pin will therefore be in load-transmitting contact with only some of the bearing balls. It has been found in practice that at least four bearing balls 37, 40 per bearing 35, 38 will usually be necessary to achieve the degree of lateral guidance necessary for positively sloped non-linear solenoids. Where desired, the lateral guidance can be further improved by increasing the number of bearing balls in each bearing.

Returning now to the description of the illustrated embodiment, the lower end of the push-pin 24 accommodates the shank 45 of the anvil 18 which cooperates with the orifice 8 to provide the variable restriction in the flowpath through the valve necessary to control fluid flow therethrough. Abutment of the anvil 18 against the surface 7 of the orifice insert 8 limits the travel of the armature assembly in the downward direction.

A fluid connection exists between the orifice chamber 9 and the space surrounding the armature 16 by way of the two ports 44 leading to the central duct 31 of the hollow push-pin 24 which is open-ended at that end and which is supported by bearing 38, and hence allows fluid from the orifice chamber 9 to reach the space surrounding the armature, with pressure changes in the orifice chamber being transmitted to that space practically instantaneously. This wet armature design provides additional damping of the armature assembly and in itself contributes to the stability of the valve, particularly if used in conjunction with a restrictor plug 46 in the outlet passage 6.

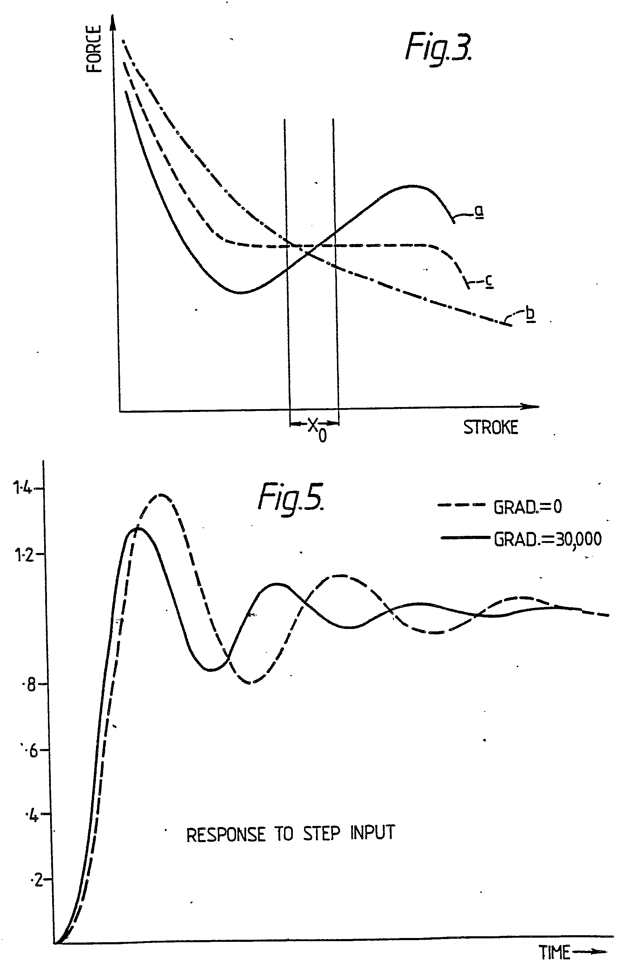

However, irrespective of whether or not a wet armature design is employed, a substantial improvement in valve stability is achieved by using a non-linear solenoid according to the present invention, having a positively sloping force-stroke characteristic over the operating range $X_o$, as illustrated schematically by curve a in Figure 3. In comparison, graphs b and c show the inverse and zero-slope (i.e. linear) force-stroke characteristic of prior art solenoids.

A mathematical analysis, carried out by the present applicants, of valve and solenoid behaviour has shown that the gradient of the force-stroke characteristic enters into the force balance equation for the armature of the solenoid in the form grad* AX, where X is the separation of the anvil 18 from the orifice 9. As the gradient and the derivative of the gradient are parameters determined by the precise shape and matching of the mating surfaces of the solenoid and armature, the possibility exists of tailoring solenoid behaviour, and thus valve behaviour, closely to the desired characteristics.

The improved lateral guidance of the armature assembly provided by ball bearings 35 and 38 allows the gap between the inside of the rim 34 and the outside of the end portion 32 of the mating endfaces to be kept small enough to achieve this positively sloping force-stroke characteristic. Force gradients of between 12,500 and 30,000 Newton/meter have so far been achieved in this manner and have been found to result in good stability of the valve.

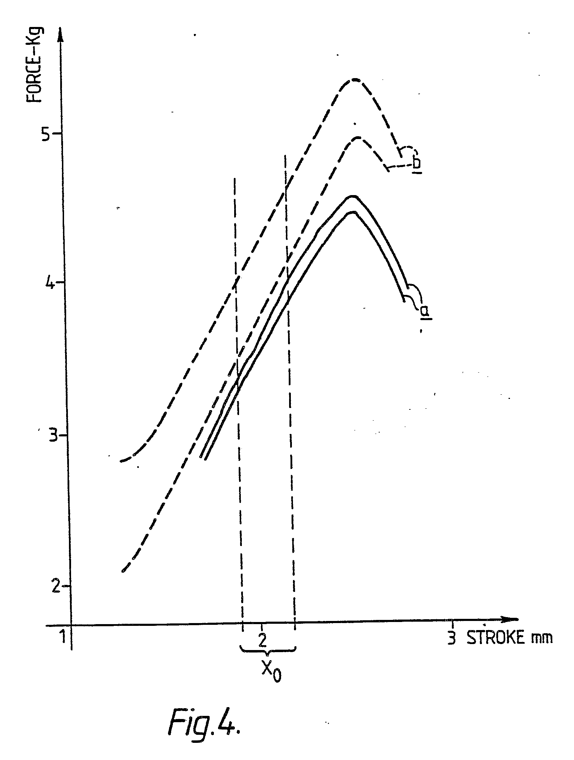

At the same time as giving better lateral guidance, the ball bearings 35, 38 reduce the frictional forces on the armature assembly, and thereby considerably reduce the width of the energisation/de-energisation hysteresis loop of the solenoid. Curve *a* of Figure 4 shows a hysteresis loop for a non-linear solenoid constructed as above described and having a positive force-stroke characteristic over the operating range, curve *b* showing a hysteresis loop for a similarly constructed solenoid but fitted, for experimental purposes, with polytetrafluorethylene bearing bushes instead.

Figure 5 shows the improved step current response of a solenoid having a gradient of 30,000 (curve *a*) as compared with a conventional linear solenoid having a zero-slope force-stroke characteristic (curve *b*). The graph clearly shows that not only does the non-linear solenoid respond somewhat faster, but also the initial overshoot is reduced and subsequent oscillatory motion of the armature dies away over a smaller number of cycles and in a shorter time.

Although the above description relates particularly to a hydraulic pressure control valve, it is to be understood that the general principles of positive slope solenoid construction as hereinbefore disclosed are equally applicable in other applications of fluid flow control valves.

## Claims

1. An electrically modulated fluid control valve (1) including variable flow restriction means (10, 18) and electromagnetic actuating means comprising a solenoid (3) having an axially displaceable armature (16) and a pole piece (17) co-axial with the armature (16), wherein the adjacent endfaces (43, 42) of the armature (16) and the pole piece (17) have one or more co-operating projections (32, 34) and recesses (33) which are shaped to provide a stroke-force characteristic which includes at least a limited region of positive slope, wherein the armature (16) is supported axially movably by at least two spaced bearings (35, 38) each having a plurality of bearing elements (37, 40) disposed radially about the axis of displacement of the armature (16) and individually rotatable about axes tangential thereto, and wherein displacement limiting means (7, 18, 41) are provided to limit displacement of the armature (16) to an operating region ($X_o$) lying substantially within the region of positive slope.

2. A valve as claimed in claim 1, in which the solenoid (3) includes a core tube (14) housing a cylindrical armature (16) and a pole piece (17), and in which the valve (1) is actuated by a push rod (24) extending from the armature (16) through the pole piece (17).

3. A valve as claimed in claim 2, in which the solenoid (3) is a wet-armature solenoid, with the interior of the core tube (14) communicating with fluid in the valve passages (9)

4. A valve as claimed in any one of the preceding claims, in which each bearing (35, 38) is a ball bearing comprising at least four evenly spaced ball bearing elements (37, 40).

5. A valve as claimed in any one of claims 2 to 4 in which the flow restriction means comprise an orifice (10), and an anvil (18) secured to the end of the push rod (24).

6. A valve as claimed in any preceding claim, in which the force gradient is of the order of 10,000 Newton/meter or greater.

7. A valve as claimed in any preceding claim, in which the force gradient lies between 12,000 and 30,000 Newton/meter.

## Revendications

1. Soupape de contrôle de fluides à modulation électrique (1) comprenant des moyens variables de limitation de débit (10, 18) et des moyens d'actionnement électromagnétiques comprenant un solénoïde (3) doté d'une armature mobile dans le sens axial (16) et une pièce polaire (17) coaxial par rapport à l'armature (16), dans laquelle les faces d'extrémité adjacentes (43, 42) de l'armature (16) et de la pièce polaire (17) comportent une ou plusieurs saillies (32, 34) et évidements (33) coopérant auxquels on donne une forme permettant d'assurer une caractéristique course-force comprenant au moins une région limitée à pente positive, dans laquelle l'armature (16) est portée mobile dans le sens axial par au moins deux roulements espacés (35, 38) comprenant chacun une pluralité d'éléments de roulement (37, 40) disposés radialement autour de l'axe de déplacement de l'armature (16) et pouvant tourner individuellement autour d'axes tangentiels à celle-ci, et dans laquelle des moyens de limitation de déplacement (7, 18, 41) sont prévus pour limiter le déplacement de l'armature (16) à une région de fonctionnement ($X_o$) située sensiblement dans les limites de la région à pente positive.

2. Soupape selon la revendication 1, dans laquelle le solénoïde (3) comprend un noyau tubulaire (14) enfermant une armature cylindrique (16) et une pièce polaire (17), et dans laquelle la soupape (1) est actionnée par un poussoir (24) s'étendant depuis l'armature (16) à travers la pièce polaire (17).

3. Soupape selon la revendication 2, dans laquelle le solénoïde (3) est un solénoïde à armature mouillée, l'intérieur du noyau tubulaire (14) communiquant avec du fluide présent dans les passages (9) de la soupape.

4. Soupape selon l'une quelconque des revendications précédentes, dans laquelle chaque roulement (35, 38) est constitué par un roulement à billes comprenant au moins quatre éléments de roulement à billes espacées régulièrement (37, 40).

5. Soupape selon l'une quelconque des revendications 2 à 4, dans laquelle les moyens de limitation de débit comprennent un orifice (10) et une enclume (18) fixée à l'extrémité du poussoir (24).

6. Soupape selon l'une quelconque des revendications précédentes, dans laquelle le gradient de force est de l'ordre de 10,000 Newton/mètre ou plus.

7. Soupape selon l'une quelconque des revendications précédentes, dans laquelle le gradient de force se situe entre 12,000 et 30,000 Newton/mètre.

## Patentansprüche

1. Elektrisch abgedämpftes Steuerventil (1) für strömende Medien mit veränderbaren, die Strömung beschränkenden Hilfsmitteln (10, 18) und mit einer elektromagnetischen Betätigungsvorrichtung, die eine Magnetspule (3) mit einem axial verschiebbaren Anker (16) und einen koaxial zum Anker (16) angeordneten Polschuh (17) enthält, wobei die benachbarten Endflächen (43, 42) des Ankers (16) und des Polschuhes (17) einen oder mehrere zusammenwirkende Vorsprünge (32, 34) und Vertiefungen (33) aufweisen, die so gestaltet sind, daß eine Hub-Kraft-Kennlinie entsteht, die zumindest in einem begrenzten Bereich eine positive Neigung besitzt, wobei der Anker (16) von mindestens zwei getrennten Lagern (35, 38) axial bewegbar gehaltert ist, die je mehrere Lagerelemente (37, 40) besitzen, die radial um die Verschiebungsachse des Ankers (16) angeordnet und einzeln um dazu tangentiale Achsen drehbar sind, und wobei die Verschiebung begrenzende Hilfsmittel (7, 18, 41) vorgesehen sind, um die Verschiebung des Ankers (16) auf einen Arbeitsbereich ($X_o$) zu begrenzen; der im wesentlichen innerhalb des Bereiches der positiven Neigung liegt.

2. Ventil, wie im Anspruch 1 beansprucht, wobei die Magnetspule (3) ein Kernrohr (14) zur Aufnahme eines zylindrischen Ankers (16) und eines Polschuhes (17) enthält, und wobei das Ventil (1) durch eine Schubstange (24) betätigt wird, die sich vom Anker (16) durch den Polschuh (17) erstreckt.

3. Ventil, wie im Anspruch 2 beansprucht, bei dem die Magnetspule (3) eine Schwimmanker-Magnetspule ist, wobei das Innere des Kernrohres (14) mit dem Medium in den Ventildurchgängen (9) in Verbindung steht.

4. Ventil, wie in einem der vorhergehenden Ansprüche beansprucht, bei dem jedes Lager (35, 38) ein Kugellager mit mindestens vier gleichförmig getrennten Kugellagerelementen (37, 40) enthält.

5. Ventil, wie in einem der Ansprüche 2 bis 4 beansprucht, bei dem die die Strömung beschränkenden Hilfsmittel eine Öffnung (10) und einen Gegenzapfen (18) enthalten, der am Ende der Schubstange (24) befestigt ist.

6. Ventil, wie in einem vorhergehenden Anspruch beansprucht, bei dem der Kraftgradient in der Größenordnung von 10.000 Newton/m oder höher liegt.

7. Ventil wie in einem vorhergehenden Anspruch beansprucht, bei dem der Kraftgradient zwischen 12,000 und 30,000 Newton/m liegt.

0 024 877

Fig.1.

Fig.2.

1

**0 024 877**

Fig.3.

FORCE

a

c

b

X₀

STROKE

Fig.5.

1·4

1·2

·8

·6

·4

·2

– – – GRAD.=0

—— GRAD.=30,000

RESPONSE TO STEP INPUT

TIME ⟶

2

Fig.4.